# EUROPEAN PATENT APPLICATION

(11) **EP 1 369 768 A2**
(43) Date of publication of application: **10.12.2003**
(21) Application number: 03012590.0
(22) Date of filing: 03.06.2003
(51) Int. Cl.: G06F 3/00

(54) **Control assembly for regulating a number of functions, particularly for a vehicle**

(30) Priority: 04.06.2002 IT TO20020473
(71) Applicant: C.R.F. Società Consortile per Azioni, 10043 Orbassano (TO) (IT)
(72) Inventor: Demontis, Salvatore, Strada Torino, 50, 10043 Orbassano (IT); Emanuele, Ruben, 10137 Torino (IT); Garreffa, Lara, 10136 Torino (IT); Malvicino, Carloandrea, 10146 Torino (IT); Seccardini, Riccardo, Strada Torino 50, 10043 Orbassano (IT)
(74) Representative: Jorio, Paolo

(57) **Abstract**

A control assembly (1) for regulating a number of functions, and particularly for a vehicle, has a control/selection device (19) enabling a user to select any one of the functions, and a knob (12) which is rotated manually to regulate the selected function; the control assembly (1) also has a motor (37) for exerting a rotation-resisting torque (C) on the knob (12), and a memory (40) containing a number of different memorized profiles (P1, P2, P3, P4, P5, P6), each associated with a relative vehicle function and indicating a relative pattern of the resisting torque (C), depending on the angular position (A) of the knob (12); a central control unit (4) controls the motor (37) to exert on the knob (12) a resisting torque (C) corresponding to the memorized profile (P1, P2, P3, P4, P5, P6) associated with the selected function; the control/selection device (19) extends along the axis (13) of the knob (12), and may be of different types, e.g. a "track-ball", joystick, or sensor pad; and a number of control/selection keys (30) are arranged about the knob (12).

## Description

The present invention relates to a control assembly for regulating a number of functions, particularly for a vehicle, to which the following description refers purely by way of example.

To control vehicle functions, such as those relating to the air-conditioning system, radio system, rearview mirror and seat adjustment, satellite navigation system, etc., a number of separate control members, i.e. knobs, levers and buttons, are provided and located in various parts of the passenger compartment.

The control members differ in construction and appearance so as to be easily distinguishable, and are operated differently to impart to the driver of the vehicle different tactile sensations depending on the type of function controlled. By way of example, in some models, the air-conditioning system features two knobs, one of which regulates air speed or flow into the passenger compartment and rotates to click between a given discrete number of positions, while the other regulates air temperature, rotates between two limit positions, and has a constant resisting torque when rotated.

The ever-increasing number of functions available, however, may create difficulty and confusion in operating the various controls, thus distracting the driver's attention from the road.

A need is therefore felt for a single control assembly integrating adjustment of the various functions on the vehicle, and which provides the driver with different tactile sensations, depending on the adjustment made, and enables ergonomic driver-function interaction to distract the driver's attention as little as possible from the road.

A need is preferably felt for a single control assembly featuring a relatively small number of component parts, and which is as compact as possible.

It is an object of the present invention to provide a control assembly for regulating a number of functions, particularly for a vehicle, which meets the above requirements in a straightforward, low-cost manner.

According to the present invention, there is provided a control assembly for regulating a number of functions, particularly for a vehicle, characterized by comprising:
- selection means enabling a user to select any one of said functions;
- a regulating member for regulating said functions and movable manually over an adjustment range;
- first control means for controlling the selected function on the basis of the position of said regulating member within said adjustment range;
- actuating means connected to said regulating member to exert a displacement-resisting reaction on the regulating member;
- memory means containing a number of different memorized profiles, each associated with a relative said function and indicating a relative pattern of said reaction as a function of the position of said regulating member; and
- second control means for so controlling said actuating means as to exert, on said regulating member, a reaction corresponding to the memorized profile associated with the selected function.

The control assembly preferably comprises:
- a supporting structure;
- a control/selection knob fitted to said supporting structure to rotate about an axis;
- a control/selection device fitted to said supporting structure and extending along said axis; and
- at least one control/selection button fitted to said supporting structure.

Said control/selection device preferably comprises a ball ("track-ball"), a joystick, or a sensor pad.

A non-limiting embodiment of the invention will be described by way of example with reference to the accompanying drawings, in which:
Figure 1 shows a schematic view of a control assembly for regulating a number of functions, particularly for a vehicle, in accordance with the present invention;
Figure 2A shows a schematic, exploded view in perspective of a detail of the Figure 1 control assembly;
Figures 2B and 2C are similar to Figure 2A, and show two variations of the Figure 1 control assembly;
Figures 3 to 5 show operating graphs of the Figure 1 control assembly.

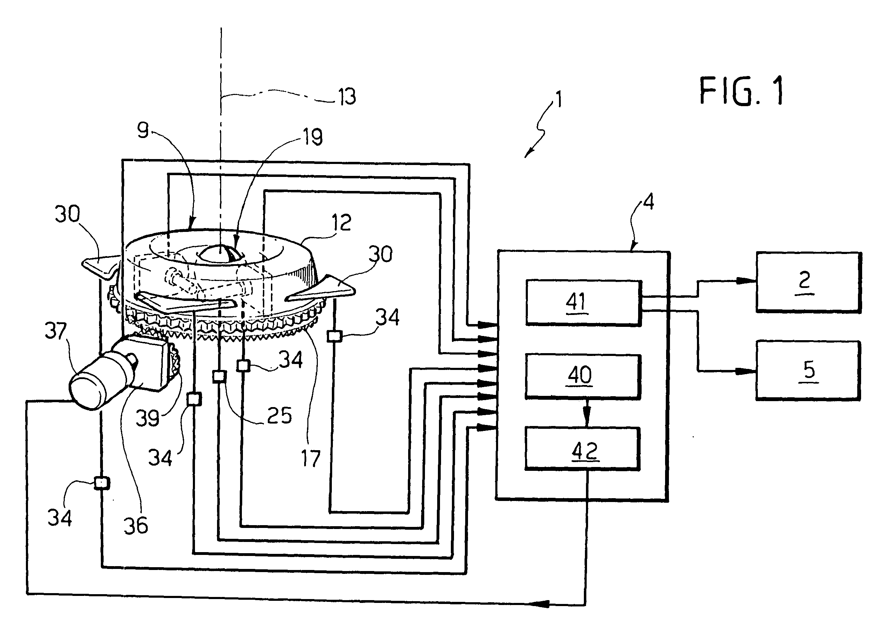

Number 1 in Figure 1 indicates a control assembly for regulating a number of functions associated, on a vehicle, with a number of systems and devices indicated schematically by 2. For example, assembly 1 controls functions relative to the air-conditioning system, radio and/or telephone system, satellite navigation system, rearview mirror and/or seat adjustment devices, etc.

Systems and devices 2 are controlled by an electronic central control unit 4, which transmits vehicle function and adjustment level information to a screen 5, on which the information is displayed in the form of graphs, diagrams, icons, menus, etc., and which acts as a graphic user interface.

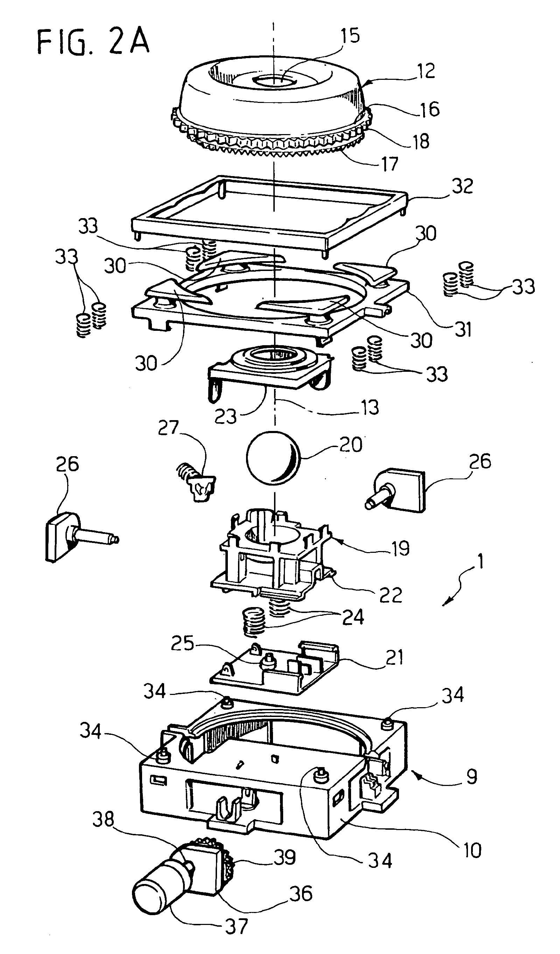

With reference to Figures 1 and 2A, screen 5 and central control unit 4 form part of assembly 1, which also comprises a user-operated manual control/selection device 9, in turn comprising a supporting base 10 connected integrally to a fastening structure (not shown) in the passenger compartment.

As shown in Figure 2A, device 9 also comprises an adjustment knob or ring nut 12, which is fitted to base 10 to rotate about an axis 13, is hollow towards base 10, has an axial through hole 15, and comprises an end edge portion 16 having an annular rack 17 axially facing base 10, and annular knurling 18 facing radially outwards.

Device 9 also comprises a ball-type selection/control device or so-called "track-ball" 19, which extends along axis 13 and in turn comprises a ball 20 projecting through hole 15; a plate 21 fixed to base 10; and a body 22, which engages knob 12, houses ball 20, is closed partly by an annular cover 23, and is connected to plate 21 in axially movable manner via the axial interposition of springs 24 and a switch 25 (shown schematically).

Switch 25 is connected to central control unit 4, and supplies central control unit 4 with a signal when ball 20 is pressed axially by the user, in opposition to the elastic action of springs 24, to select any one of the vehicle functions. Ball 20 also rotates about its centre to activate two "encoder" type angular-position sensors 26 fitted to body 22 and connected to central control unit 4, e.g. to control display on screen 5, and is maintained radially contacting sensors 26 by a push member 27 also fitted to body 22.

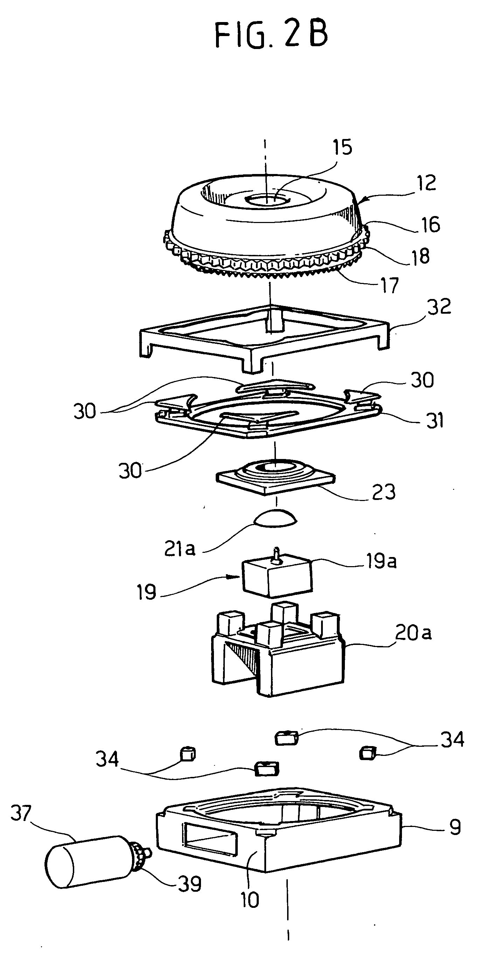

In a second embodiment of device 19 shown in Figure 2B, device 19 comprises a joystick 19a, in which switch 25 in Figure 2A is also integrated. Ball 20 in Figure 2A is replaced by a deformable-rubber member 21a, in which the lever of joystick 19a is hinged; and joystick 19a itself is fitted to a supporting structure 20a fixed to base 10.

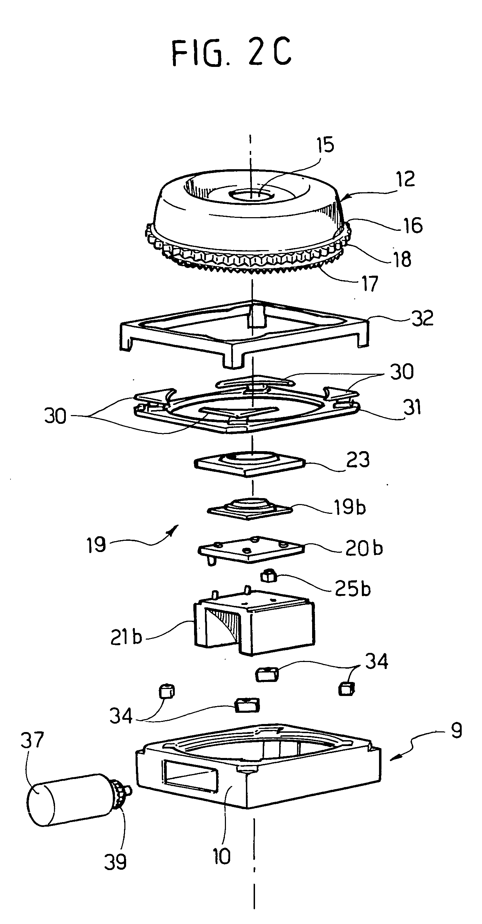

In a third embodiment of device 19 shown in Figure 2C, device 19 comprises a component 19b, which operates via a contact sensor pad. Component 19b is supported on a platform 20b movable about a vertical hinge for connection to a supporting structure 21b in turn fixed to base 10. When pressure over and above a given threshold is exerted on the centre of component 19b, platform 20b activates a button 25b on top of structure 21b.

With reference to Figure 2A, device 9 comprises four keys 30 formed in one piece with a frame 31 fixed to base 10 and covered partly by a border 32.

Keys 30 are equally spaced angularly about knob 12, and are pressed, in opposition to the elastic action of respective springs 33, to activate respective switches 34 (shown schematically) fitted to base 10 and connected to central control unit 4 to transmit respective control/selection signals.

The angular position of knob 12 about axis 13 is determined by an "encoder" type angular-position sensor 36, which is connected to central control unit 4, is coaxial with a motor 37, and is fitted to the output shaft 38 of motor 37. Shaft 38 is perpendicular to axis 13, and terminates, on the opposite side to motor 37, with a sprocket 39 meshing with rack 17; and motor 37 is controlled by central control unit 4, and exerts a rotation-resisting torque on knob 12 by means of the sprocket 39-rack 17 transmission.

More specifically, central control unit 4 comprises a memory 40 containing a number of different memorized profiles, each associated with a relative vehicle function and indicating a relative resisting torque pattern to be exerted as a function of the angular position of knob 12. Central control unit 4 also comprises a unit 41 for controlling systems and devices 2 on the basis of the user-selected function and the angular position detected by sensor 36; and a unit 42 for controlling motor 37 so as to exert on knob 12 a resisting torque corresponding to the memorized profile relative to the selected function.

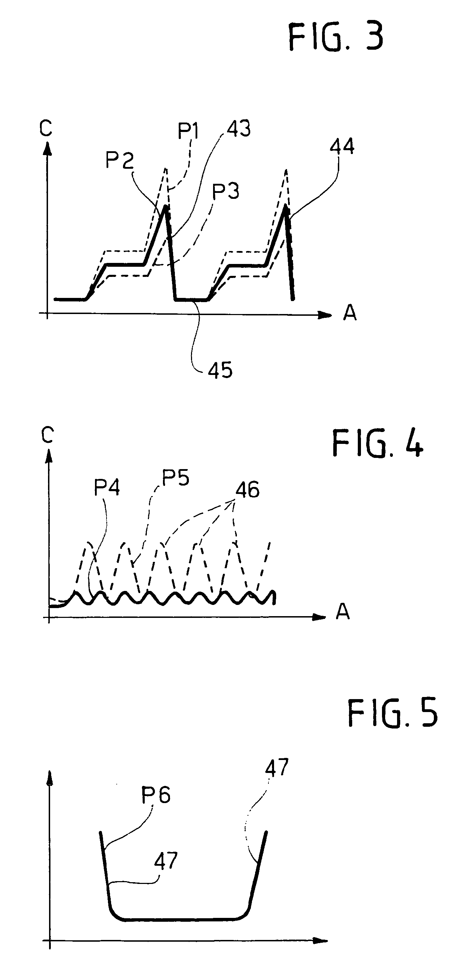

Figures 3 to 5 show respective examples of memorized profiles in the form of graphs, in which the y axis shows the resisting torque C to be exerted by motor 37 on knob 12, and the x axis the angle A of rotation of knob 12.

Profiles P1, P2, P3 in Figure 3 show respective resisting torque patterns, each simulating rotation of knob 12 with two successive clicks defined by torque peaks 43, 44, and with an intermediate rest position between the clicks defined by a trough 45 between peaks 43, 44. The tactile sensation imparted to the user is similar to that of conventional knobs with a discrete number of clicks, e.g. for regulating airflow to ventilate the passenger compartment. Profiles P1, P2, P3 differ as regards the intensity of relative peaks 43, 44.

Profiles P4, P5 in Figure 4 show respective sinusoidal resisting torque patterns, each simulating rotation of knob 12 with a number of successive, closely spaced clicks defined by relatively low peaks 46.

Profile P6 in Figure 5 shows a resisting torque pattern simulating rotation of knob 12 between two limit stops defined by respective resisting torque rams 47.

In actual use, the user rotates knob 12 and presses device 19 along axis 13, as though it were an activating member, to select, first, the system of which the function to be regulated forms part, and then the function itself.

The resisting torque of the knob is varied by motor 37 and unit 42 to simulate different rotation modes about axis 13 and impart different tactile sensations to the user depending on the type of function selected.

More specifically, unit 42 selects the profile associated with the selected function, and controls motor 37 to set the resisting torque profile on knob 12.

When knob 12 is rotated, the tactile sensation imparted to the user is a direct consequence of the resisting torque set by motor 37 as commanded by unit 42, while unit 41 regulates the selected function.

Assembly 1 therefore provides for regulating different functions by means of one device 9, and in particular by means of one knob 12, thus eliminating the need for numerous knobs and/or control members for controlling different vehicle functions.

Moreover, device 9 is extremely compact and comprises a relatively small number of component parts, in particular by virtue of device 19 coaxial with and housed partly inside knob 12.

At the same time, switches 25, 34, device 19, and knob 12 provide for a wide range of commands by which to control display on screen 5 and control and/or select the vehicle functions.

Clearly, changes may be made to assembly 1 as described and illustrated herein without, however, departing from the scope of the present invention.

In particular, the principle of varying the resisting torque on knob 12 on the basis of memorized profiles may also be applied to different control members, even translating members, such as levers and slides.

Device 9 may be provided with a preloaded, e.g. ball-type, retaining member cooperating with knurling 18, and which may be adjustable, and increases the resisting torque on knob 12 and/or imparts a clicking tactile sensation to the user during rotation.

The function for adjustment may be selected otherwise than as described by way of example, e.g. automatically by central control unit 4 when knob 12 or ball 20 reach predetermined angular positions.

Finally, the present invention may be applied to other than vehicles, e.g. aircraft or household equipment.

## Claims

1. A control assembly (1) for regulating a number of functions, particularly for a vehicle, **characterized by** comprising:
- selection means (19, 12) enabling a user to select any one of said functions;
- a regulating member (12) for regulating said functions and movable manually over an adjustment range;
- first control means (41) for controlling the selected function on the basis of the position (A) of said regulating member (12) within said adjustment range;
- actuating means (37, 38, 39, 17) connected to said regulating member (12) to exert a displacement-resisting reaction (C) on the regulating member (12);
- memory means (40) containing a number of different memorized profiles (P1, P2, P3, P4, P5, P6), each associated with a relative said function and indicating a relative pattern of said reaction (C) as a function of the position (A) of said regulating member; and
- second control means (42) for so controlling said actuating means (37, 38, 39, 17) as to exert, on said regulating member (12), a reaction (C) corresponding to the memorized profile (P1, P2, P3, P4, P5, P6) associated with the selected function.

2. An assembly as claimed in Claim 1, **characterized by** comprising:
- a supporting structure (10);
- a control/selection knob (12) fitted to said supporting structure (10) to rotate about an axis (13);
- a control/selection device (19) fitted to said supporting structure (10) and extending along said axis (13); and
- at least one control/selection button (20, 30) fitted to said supporting structure (10).

3. An assembly as claimed in Claim 2, **characterized by** comprising a number of said control/selection buttons (30) equally spaced angularly about said control/selection knob (12).

4. An assembly as claimed in Claim 2 or 3, **characterized in that** said regulating member (12) is defined by said control/selection knob (12); said first (41) and second (42) control means comprising a single sensor (36) for determining the angular position of said control/selection knob (12).

5. An assembly as claimed in Claim 4, **characterized in that** said actuating means (37, 38, 39, 17) comprise an electric motor (37), and a sprocket-rack transmission (39, 17) interposed between said control/selection knob (12) and said motor (37).

6. An assembly as claimed in Claim 5, **characterized in that** said motor (37) has an output shaft (38) perpendicular to said axis (13).

7. An assembly as claimed in any one of Claims 4 to 6, characterized is that said sensor (36) is fitted directly to the output shaft (38) of said motor (37).

8. An assembly as claimed in any one of Claims 2 to 7, **characterized in that** said control/selection device (19) comprises a housing body (22) fitted movably to said supporting structure (10) to form part of a further button operated manually by axial pressure.

9. An assembly as claimed in Claim 8, **characterized in that** said control/selection knob (12) is hollow and engaged by said housing body (22); said control/selection device (19) projecting through an axial hole (15) in said control/selection knob (12).

10. An assembly as claimed in Claim 8 or 9, **characterized in that** said control/selection device (19) comprises a ball (20) housed in said housing body (22).

11. An assembly as claimed in any one of Claims 2 to 9, **characterized in that** said control/selection device (19) comprises a joystick (19a).

12. An assembly as claimed in any one of Claims 2 to 9, **characterized in that** said control/selection device (19) comprises a sensor pad (19b).

13. An assembly as claimed in any one of Claims 2 to 12, **characterized in that** said control/selection device (19) forms part of said selection means (19, 21).

14. An assembly as claimed in any one of the foregoing Claims, **characterized by** comprising a screen (5) for graphically displaying regulation of said functions.
